# EUROPÄISCHE PATENTSCHRIFT

(11) **EP 1 572 412 B1**
(45) Veröffentlichungstag und Bekanntmachung des Hinweises auf die Patenterteilung: **21.06.2006**
(21) Anmeldenummer: 03795858.4
(22) Anmeldetag: 29.11.2003
(51) Int. Cl.: B23K 9/173

(54) **VERFAHREN ZUM LICHTBOGENSCHWEISSEN VON DUKTILEM GUSSEISEN**
METHOD FOR ARC WELDING OF DUCTILE CAST IRON
PROCEDE POUR SOUDER A L'ARC DE LA FONTE DUCTILE

(30) Priorität: 20.12.2002 DE 10260358
(43) Veröffentlichungstag der Anmeldung: 14.09.2005
(73) Patentinhaber: Linde Aktiengesellschaft, 65189 Wiesbaden (DE)
(72) Erfinder: HELGEE, Stefan, S-11639 Stockholm (SE); TANI, Jorma, S-13134 Nacka (SE)
(74) Vertreter: Kasseckert, Rainer
(86) Internationale Anmeldenummer: PCT/EP2003/013478
(87) Internationale Veröffentlichungsnummer: WO 2004/058441

(56) Entgegenhaltungen:
- DE-A- 3 600 813
- US-B1- 6 274 838
- HEADQUSRTERS DEPARTMENT OF THE ARMY: TRAININC CIRCULAR, [Online] Nr. 9-237, - 7. Mai 2003 (2003-05-07) Seiten 7.45-7.65, XP002278495 Gefunden im Internet: <URL:http://www.adtdl.army.mil/cgi-bin/atd l.dll/tc/9-237/ch7.pdf> [gefunden am 2004-04-29]

## Beschreibung

Die Erfindung betrifft ein Verfahren zum Lichtbogenschweißen mit abschmelzender Elektrode unter Schutzgas zum Verbinden von Bauteilen, wobei das eine Bauteil aus duktilem Gusseisen und das andere Bauteil aus duktilem Gusseisen oder Stahl hergestellt ist und wobei das Schutzgas neben Argon Kohlendioxid und/oder Sauerstoff enthält. (siehe DE-A-3 600 813).

Ferner betrifft die Erfindung die Verwendung einer Schutzgasmischung zum Lichtbogenschweißen von duktilem Gusseisen mit abschmelzender Elektrode, welche neben Argon Kohlendioxid und/oder Sauerstoff enthält (siehe den Oberbegriff des Anspruchs 19).

Gusseisen wird als graues Roheisen im Hochofen erschmolzen und durch Umschmelzen erzeugt. Besondere Merkmale des Gusseisens sind die hohen Gehalte an Kohlenstoff und Silizium. Typischerweise enthält Gusseisen 3 bis 4 wt % (Gewichtsprozent) Kohlenstoff und 1 bis 3 wt % Silizium sowie 0,2 bis 1 wt % Mangan. Gusseisen unterscheidet sich seinen Eigenschaften grundlegend von Stahl und ist im Vergleich zu diesem hart und brüchig. Gusseisen liegt in verschiedenen Formen vor, welche sich in den Materialeigenschaften unterscheiden. Die verschiedenen Formen des Gusseisens werden durch die Gewichtsanteile der Bestandteile sowie durch Abkühlgeschwindigkeiten nach der Herstellung im Hochofen bestimmt. Bei langsamer Abkühlung scheidet der gelöste Kohlenstoff aus Graphit aus. Die Graphitausscheidung wird durch keimbildende Substanzen und weiteren Legierungselementen beeinflusst. Durch eine Zugabe von Magnesium oder Zer, welche üblicherweise im Bereich von 0,02 bis 0,7 wt % erfolgt scheidet der Kohlenstoff kugelförmig aus. Es entsteht duktiles Gusseisen. Duktiles Gusseisen weist von allen Gusseisenarten die höchste Zugfestigkeit und größte Bruchfestigkeit auf. Die den Kohlenstoff umgebende Matrix zeigt eine Mikrostruktur, dessen Art von der chemischen Zusammensetzung des Gusseisens, der Abkühlungsgeschwindigkeiten bei der Herstellung beziehungsweise von einer Wärmebehandlung des Gusseisens abhängt. Bei der Matrix wird zwischen den Mikrostrukturen ferritisch, ferritisch-perlitisch, perlitisch und martensitisch unterscheiden.

Prinzipiell ist das Schweißen von duktilem Gusseisen möglich. In der Praxis zeigen sich jedoch erhebliche Probleme. Das Schweißen von duktilem Gusseisen erfordert spezielle, sehr aufwendige Schweißtechniken, damit die Schweißfähigkeit des Materials gegeben ist und zufriedenstellende Ergebnisse erzielt werden. Dabei sind insbesondere langdauernde Vorwärm- und Abkühlprozeduren oder an den Schweißvorgang sich anschließende Wärmebehandlungen durchzuführen, wobei die Aufheiz- und die Abkühlgeschwindigkeiten sehr gering gewählt werden müssen, um Risse und Spannungen im Werkstück zu vermeiden. Risse und Spannungen entstehen durch den Wärmeeintrag in das Material beim Schweißen, wodurch es zu Gefügeveränderungen und zur Umformung der Mikrostruktur der Matrix kommt. Hierfür sind die großen Temperaturdifferenzen verantwortlich, welche Diffusionsprozesse des Kohlenstoffs begünstigen und damit Gefügeveränderungen verursachen. Durch Vorwärm- und Abkühlprozeduren und Wärmebehandlung behält das duktile Gusseisen die gewünschte Struktur und Risse und Spannungen werden unterbunden. Aufgrund dieser aufwändigen Prozeduren ist das Schweißen von duktilem Gusseisen nur mit einer sehr geringen Produktivität möglich und wird folglich in der Produktion nicht benutzt. Lediglich für Reparaturen und Instandsetzungen von Bauteilen aus Gusseisen wird das Schweißen benutzt.

Auch beim Schweißvorgang selbst sind nur sehr geringe Abschmelzraten im Bereich von sehr wenigen kg/h möglich. Dies ist ein weiterer Faktor, der zu einer geringen Produktivität führt. Als Lichtbogen wird der Kurzlichtbogen eingesetzt. Die Verwendung eines Kurzlichtbogens lässt eine höhere Abschmelzraten nicht zu, da der Kurzlichtbogen bei höheren Abschmelzraten zu fehlerhaften Schweißnähten führt. Als Schutzgas für den Lichtbogen wird bisher im allgemeinen Argon verwendet. Als Füllmaterial sind verschiedene Schweißdrähte geeignet. Meistens zeichnen sich die benutzten Schweißdrähte durch einen hohen Anteil an Nickel aus, der oft bei über 60 wt % liegt. Einen Schweißzusatzwerkstoff zum Schutzgasschweißen von Gusseisen auf der Basis von Nickel, Eisen, Mangan und Kohlenstoff ist beispielsweise auch in der DE 24 37 247 offenbart. In dieser Druckschrift wird ferner als Schutzgas ein Argon-Kohlendioxid oder ein Argon-Kohlendioxid-Sauerstoff Gemisch und als Lichtbogen wird der lmpulslichtbogen empfohlen.

Die genannten Probleme zeigen sich beim Fügen von duktilem Gusseisen und auch beim Verbinden von duktilem Gusseisen und Stählen. Besonders ausgeprägt treten diese Probleme zudem auf, wenn das Schweißverfahren, welches für den schweißbaren Stahl anzuwenden ist, sich von dem Schweißverfahren für duktiles Gusseisen deutlich unterscheidet. Da es sich beim Schweißverfahren für duktiles Gusseisen um ein sehr spezielles Verfahren handelt, ist dies sehr häufig der Fall. Ein Verfahren zum Verbinden von Bauteilen aus Gusseisen und Stahl mittels Lichtbogenschweißen mit einer abschmelzenden Elektrode ohne Vorwärmen der Bauteile beinhaltet die DE 36 00 813. Die Verschweißung erfolgt laut dieser Druckschrift mit Lichtbogenschweißen mit einer abschmelzenden, nickelfreien Elektrode unter Schutzgas im Impulsbetrieb mit einer Zwei- oder Drei-Komponenten-Gasmischung aus Argon, Kohlendioxid und/oder Sauerstoff. Dem Schweißprozess ist dabei eine Glühung nachgeschaltet, um unerwünschte Veränderungen im Gusseisen bezüglich des chemischen Vorliegens des Kohlenstoffs und des Gefüges zu unterbinden.

Der Erfindung liegt die Aufgabe zugrunde, ein Verfahren zum Lichtbogenschweißen mit abschmelzender Elektrode anzugeben, welches die Schweißung von duktilem Gusseisen und duktilem Gusseisen sowie von duktilem Gusseisen und Stahl mit hoher Produktivität ermöglicht und damit den Einsatzbereich für den Werkstoff duktiles Gusseisen erweitert und insbesondere die Verwendung des Werkstoffs duktiles Gusseisen für Konstruktions- und Fertigungsbauteile durch die Möglichkeit von geschweißten Bauteilverbindungen bereitstellt.

Die Erfindung ist im Ansprüche 1 und 19 definiert.

Überraschenderweise wird mit dem erfindungsgemäßen Schutzgas eine Gefügeveränderung und eine negative Beeinflussung der Eigenschaften des duktilen Gusseisens weitgehend unterbunden und es entstehen nahezu spannungsfreie Schweißnähte. Auch das Entstehen von Spannungen und Rissen in und an der Schweißnaht wird vermieden. Dies ist darauf zurückzuführen, dass mit dem erfindungsgemäßen Verfahren eine Kontrolle der Wärmezufuhr durch den Schweißdraht in das Schweißbad und eine Kontrolle der Wärmezufuhr in den Werkstoff duktiles Gusseisen erreicht wird. Mit dieser Kontrolle der Wärmezufuhr wird es möglich, die unerwünschte Diffusion des Kohlenstoffs im duktilem Gusseisen zu unterbinden. Das Entstehen von harten und spröden Bereichen im duktilen Gusseisen, welche sehr bruchempfindlich sind, wird verhindert. Statt dessen bleiben die vorhandenen Mikrostrukturen und damit die Festigkeit des duktilen Gusseisens erhalten. Die Vorteile zeigen sich bei allen Mikrostrukturen, welche im duktilen Gusseisen vorliegen können. Bei duktilem Gusseisen ist es mit dem erfindungsgemäßen Verfahren möglich, akzeptable Schweißergebnisse auch dann zu erreichen, wenn auf ein verlangsamtes Abkühlen oder eine nachgeschaltete Wärmebehandlung verzichtet wird. Bessere Ergebnisse zeigen sich, wenn das Abkühlen verlangsamt wird. Wird dem Schweißvorgang eine Wärmebehandlung nachgeschaltet, zeigen sich die besten Schweißergebnisse. Weiterhin werden durch die Verwendung von Kohlendioxid und/oder Sauerstoff im Schutzgas die Eigenschaften des Schweißbads und der Schweißnaht positiv beeinflusst. Kohlendioxid und Sauerstoff erhöhen den Wärmeeintrag an der Schweißstelle und stabilisieren den Lichtbogen. Diese beiden Faktoren unterbinden das Entstehen von Poren. Es entstehen qualitativ hochwertige Schweißverbindungen. Das erfindungsgemäße Verfahren eignet sich sowohl zum Verbinden von Bauteilen aus duktilem Gusseisen als auch zum Verbinden von Bauteilen aus duktilem Gusseisen mit Bauteilen aus Stahl. Wird ein Bauteil aus duktilem Gusseisen mit einem Bauteil aus Stahl verbunden, werden für die Bauteile aus Stahl vorzugsweise un- und niedriglegierter Stähle verwendet. Möglich sind jedoch auch Stahlbauteile aus Stählen mit höherer Festigkeit, wie sie beispielsweise im Fahrzeugbau oder beim Kranbau verwendet werden, oder aus korrosionsbeständigen Stählen.

Vorteilhafterweise werden Abschmelzraten von mehr als 4 kg/h, in den meisten Fällen von mehr als 8 kg/h und in günstigen Fällen von sogar mehr als 12 kg/h erreicht. In vorteilhaften Ausnahmefällen werden auch Abschmelzraten von mehr als 15 kg/h erreicht. Die mit dem erfindungsgemäßen Verfahren ins Auge gefassten Abschmelzraten liegen vorzugsweise im Bereich von 8 bis 15 kg/h. Bei Verwendung eins Fülldrahts als Drahtelektrode werden meist Abschmelzraten von mehr als 12 kg/h erreicht, oft auch von mehr als 15 kg/h. Mit diesen Abschmelzraten ist eine hohe Produktivität gewährleistet.

In einer möglichen, vorteilhaften Ausgestaltung der Erfindung werden zur Herstellung der Verbindung zwei Schweißdrähte verwendet. Durch die Verwendung von zwei Schweißdrähten werden Abschmelzraten erzielt, die in etwa das Doppelte als die vorgenannten Werte betragen. Die beiden Schweißdrähte müssen dabei nicht den gleichen Drahtdurchmesser aufweisen. Die Abschmelzraten beim Schweißen mit zwei Drähten liegen somit vorteilhafterweise bei mehr als 8 kg/h, besonders vorteilhafterweise werden mehr als 20 kg/h erreicht. Die Verwendung von zwei Schweißdrähten stellt eine spezielle, besonders vorteilhafte Variante des erfindungsgemäßen Verfahrens da. Die vorteilhaften Ausgestaltungen betreffen jedoch nicht nur das spezielle Schweißverfahren mit zwei Drähten, sondern auch das meistens zum Einsatz kommende Schweißen mit nur einem Schweißdraht.

In der Erfindung wird dem Schutzgas Kohlendioxid in einem Anteil von 1 bis 15 Vol.-%, vorzugsweise von 2 bis 10 Vol.-% beigegeben. Mit diesen Kohlendioxidanteilen zeigen sich die Vorteile des erfindungsgemäßen Verfahrens besonders ausgeprägt. Kohlendioxid ist einerseits bereits bei einer Verwendung in Volumenanteilen gemäß den unteren der angegebenen Grenzen genügend aktiv, um auf den Schweißvorgang einwirken zu können, und anderseits ist auch bei Volumenanteilen gemäß den oberen Grenzen eine negative Einflussnahme auf Werkstoffe und Schweißnaht ausgeschlossen.

Vorteilhafterweise wird im Schutzgas Sauerstoff in einem Anteil von 1 bis 3 Vol.-% vorgesehen. Bei der Verwendung von Sauerstoff zeigen sich im wesentlichen die gleichen Vorteile wie bei Verwendung von Kohlenstoff. Die oberen Grenzen für die Sauerstoffzugabe liegen jedoch unterhalb den Volumenmengen an Kohlenstoff, da sowohl duktiles Gusseisen als auch Stahl von dem sehr aktiven Sauerstoff bei höheren als den angegebenen Volumenzugaben angegriffen werden und dies zu Rissen und Poren an und in den Schweißnähten führt.

Insbesondere zeigen sich die Vorteile der Erfindung, wenn dem Schutzgas zusätzlich Stickstoffmonoxid zugegeben wird. Durch die Zugabe des Stickstoffmonoxids der Lichtbogen äußert effektiv stabilisiert und es entstehen nahezu porenfreie Nähte. Ferner führt die Stickstoffmonoxidzugabe zu einer deutlichen Reduzierung der beim Lichtbogenschweißen entstehenden Ozonemission und verbessert damit die Bedingungen am Arbeitsplatz. Weiterhin wird durch die Stickstoffmonoxidzugabe das Entstehen von Spritzem weitgehend unterbunden. Dies erleichtert die Handhabung des Schweißbrenners beim manuellen Schweißen und die Parameterwahl beim automatischen Schweißen. Der Vorteil eines stabilen Lichtbogens ist es, dass ein gleichmäßiger Werkstoffübergang von der abschmelzenden Drahtelektrode in das Schweißbad stattfindet. Dadurch wird das Entstehen von Poren weitgehend unterbunden. Die Stabilisierung zeigt sich bei allen Schutzgasmischungen des erfindungsgemäßen Verfahren. Besonderen Vorteil bietet sie bei heliumhaltigen Schutzgasmischungen. Da eine Heliumzugabe zu Instabilitäten im Lichtbogen führt, ist bei einer Heliumzugabe für Ausgleich zu sorgen und der Lichtbogen zu stabilisieren. Dies geschieht erfindungsgemäß durch den Kohlendioxidanteil und auch durch den Sauerstoffanteil. Darüber hinaus wird dies insbesondere durch die Zugabe von Stickstoffmonoxid erreicht. Bei diesem sehr aktiven Gas zeigen sich die Vorteile bereits bei einer Mikrobeigabe. Bei Zugabe von Stickstoffmonoxid im Prozentbereich zeigen sich bereits negative Effekte, die auf die Aggressivität des Stickstoffmonoxids zurückzuführen sind. Der Stickstoffmonoxidanteil muss deshalb auf Volumenanteile von unterhalb eines Prozents begrenzt bleiben. Die Zugabe von Stickstoffmonoxid erfolgt somit vorteilhafterweise als Mikrobeimischungen und es werden vorteilhafterweise dem Schutzgas 10 bis 5000 vpm (0,001 bis 0,5 Vol.-%) Stickstoffmonoxid (NO), vorzugsweise 100 bis 1000 vpm (0,01 bis 0,1 Vol.-%) Stickstoffmonoxid (NO) zugegeben. In diesen Volumenanteilen zeigen sich die Vorteile der Stickstoffmonoxidzugabe. Die Nachteile treten jedoch noch nicht auf.

Mit besonderem Vorteil wird dem Schutzgas 10 bis 60 Vol.-% Helium, vorzugsweise 20 bis 50 Vol.-% Helium, besonders bevorzugt 30 bis 40 Vol.-% beigegeben. Bevorzugt wird das Helium dabei im Schutzgas Volumenanteile an Argon ersetzen. Jedoch verteuert die Verwendung von Helium anstelle des deutlich kostengünstigeren Argons den Scheißvorgang. Durch die Heliumzugabe verbessern sich die Eigenschaften des Schweißbads und auch bei hohen Schweißgeschwindigkeiten wird das Entstehen von Poren unterdrückt. Um einen deutlich merkbaren Effekt zu erzielen, ist ein Heliumanteil von mindestens 10 Vol.-%, vorzugsweise von mindestens 20 Vol.-% zu verwenden.

In vorteilhafter Ausgestaltung der Erfindung wird ein Sprühlichtbogen verwendet. Um die gewünschten hohen Abschmelzraten zu erreichen ist die Verwendung eines Sprühlichtbogens erforderlich. Die Verwendung eines Sprühlichtbogens führt normalerweise zu einer hohen Porosität der Schweißverbindung. Mit dem erfindungsgemäßen Verfahren liefert jedoch auch der Sprühlichtbogen nahezu porenfreie Nähte. Auch das Entstehen von Rissen und Defekten im duktilen Gusseisen wird unterbunden. Weiterhin ist der Lichtbogen mit dem erfindungsgemäßen Verfahren auch als Sprühlichtbogen stabil und gut zu kontrollieren.

Weiterhin wird in vorteilhafter Ausgestaltung der Erfindung eine freie Elektrodenlänge von mindestens 15 mm, vorzugsweise von mindestens 18 mm verwendet. Bei Verwendung eines Fülldrahts ist die freie Elektrodenlänge vorteilhafterweise noch weiter zu erhöhen und eine freie Elektrodenlänge von mehr als 20 mm, insbesondere von mehr als 23 mm ist mit Vorteil zu verwenden. Damit wird beim Schweißen von duktilem Gusseisen und von duktilem Gusseisen mit Stahl eine deutlich größere freie Elektrodenlänge gewählt als beim Schweißen von Stahlbauteilen. Die im Vergleich zu herkömmlichen Verfahren vergrößerte Elektrodenlänge unterstützt die Lichtbogenstabilität und die Kontrolle des Lichtbogens. Ferner verbessert eine solche größere freie Elektrodenlänge die Kontrolle über die Wärmezufuhr in den Schweißdraht. Dadurch wird der Wärmeeintrag in den Werkstoff duktilen Gusseisen besser kontrollierbar und Gefügeänderung können unterbunden werden. Eine freie Elektrodenlänge im Bereich von 20 bis 30 mm ist besonders empfehlenswert. Bei Wahl einer Drahtvorschubgeschwindigkeit im oberen Bereich des für das Schweißen von duktilen Gusseisen genannten Bereichs von in etwa 20 m/min bis hinzu 30 m/min kann die freie Elektrodenlänge sogar bei Werten von 37 bis 42 mm liegen.

In einer vorteilhaften Ausgestaltung der Erfindung wird das Verfahren des Impulslichtbogenschweißens verwendet. Die Vorteile des erfindungsgemäßen Verfahren zeigen sich nicht nur bei der Verwendung eines Sprühlichtbogens sondem auch beim Impulslichtbogenschweißen.

Bei abschmelzender Elektrode ist im allgemeinen die Elektrode der Schweißdraht und es werden keine weiteren Füllmaterialien für die Schweißnaht verwendet. Die Drahtvorschubgeschwindigkeit beeinflusst die Abschmelzrate und die Schweißgeschwindigkeit und bestimmt somit auch die Materialmenge der Fülllagen. Beim Schweißen von duktilen Gusseisenverbindungen und duktilen Gusseisen-Stahl-Verbindungen liegt die zu verwendende Drahtvorschubgeschwindigkeit vorteilhafterweise im Bereich von 10 bis 50 m/min, bevorzugt von 15 bis 30 m/min. Derartige Drahtvorschubgeschwindigkeiten ermöglichen das Herstellen von Verbindungen auf wirtschaftliche Weise. Darüber hinaus muss auch bei der Drahtvorschubgeschwindigkeit gewährleistet sein, dass die Kontrolle der Wärmezufuhr gegeben ist und Nähte ohne Bindefehler gebildet werden. Auch müssen Gefügeänderungen im duktilen Gusseisen unterbunden werden.

Als Drahtelektrode werden vorzugsweise Volldrähte oder Fülldrähte verwendet. Die Drahtdurchmesser liegen bevorzugt bei 0,8 bis 2,0 mm, vorzugsweise bei 1,0 bis 1,6 mm. Prinzipiell sind alle Schweißdrähte, welche bisher zum (Reparatur-)Schweißen von duktilen Gusseisen verwendet werden, für das erfindungsgemäße Verfahren geeignet. Die Hauptbestandteile solcher Schweißdrähte sind im allgemeinen Eisen und Nickel, wobei Nickel mit einem Anteil von mehr als 30 wt% enthalten ist. Der Anteil an Kohlenstoff liegt meistens bei 1 wt%. Oft enthält der Schweißdraht auch mehr als 10 wt% Mangan.

In vorteilhafter Ausgestaltung der Erfindung wird eine Lichtbogenspannung von mehr als 28 V, vorzugsweise im Bereich von 32 und 45 V verwendet.

Weiterhin wird vorteilhafterweise ein Strom von 220 bis 500 A, vorzugsweise von 260 bis 450 A eingestellt.

In vorteilhafter Ausgestaltung wird die Verbindung aus mindestens zwei Schweißlagen erstellt. Dazu bietet sich folgende vorteilhafte Vorgehensweise an: Die erste Lage der Schweißnaht, die sogenannte Wurzellage wird mit dem erfindungsgemäßen Verfahren angebracht. Danach wird auf diese erste Lage eine zweite Lage, die sogenannte Fülllage gelegt. Dies geschieht normalerweise beim Schweißen, um dicke Bauteile zu verbinden. Beim Schweißen von duktilem Gusseisen zeigt sich dabei überraschenderweise ein bisher nicht bekannter Vorteil: Bei der zweiten Lage findet, wie bei jeder Schweißung, mittels des Lichtbogens ein Wärmeeintrag in das Schweißbad und das die Schweißstelle umgebendes Material statt. Dieser Wärmeeintrag stellt nun eine Wärmebehandlung für die tiefer liegende Lage dar. Durch Aufbringen von mehr als einer Schweißlage findet folglich durch das Aufbringen der folgenden Schweißlage an sich eine Wärmebehandlung der vorherigen Schweißlage statt. Alle, bis auf die zuletzt aufgebrachte Schweißlage profitieren somit von den vorteilhaften Auswirkungen der Wärmebehandlung auf die Schweißnaht. Hierzu ist ferner anzumerken, dass bei mehreren Schweißlagen einzelne Schweißlagen, insbesondere die Wurzellage auch mittels des WIG-Schweißens mit nicht abschmelzender Elektrode aufgebracht werden können.

Vorteilhafterweise werden zumindest die Bauteile aus duktilem Gusseisen vor dem Schweißvorgang auf Temperaturen von 200 bis 250 °C vorgewärmt. Dies vermindert die Temperaturdifferenz im duktilen Gusseisen in der Umgebung der Schweißstelle wesentlich und trägt damit zur Unterbindung von Gefügeveränderungen bei.

In Ausgestaltung der Erfindung ist ein verlangsamtes Abkühlen der verbunden Bauteile oder alternativ eine Nachbehandlung nach dem Schweißvorgang von Vorteil. Ein verlangsamtes Abkühlen, welches vorzugsweise durch Einbetten der verschweißten Bauteile in Kieselguhr erreicht wird, ist gegenüber dem Abkühlen an Luft von Vorteil, da dies die Eigenschaften der Schweißverbindung verbessert.

Alternativ dazu werden die verbundenen Bauteile einer Nachbehandlung unterworfen, um die mechanischen Eigenschaften zu verbessern, eine Spannungsentlastung zu erreichen und die Mikrostruktur des duktilen Gusseisens zu verbessern. Dazu werden die Bauteile nach dem Schweißvorgang in einem Ofen für 1 bis 3 Stunden auf 500 bis 900 °C erwärmt und danach an Luft abgekühlt. Mit einer nachgeschalteten Wärmebehandlungen verbessern sich die Schweißergebnisse gegenüber der Vorgehensweise mit verlangsamter Abkühlung. Jedoch werden auch bei einer Abkühlung an Umgebungsluft akzeptable Schweißergebnisse erreicht.

Bei einer Verwendung der erfindungsgemäßen Schutzgasmischung zum Verbinden von Bauteilen aus duktilem Gusseisen und duktilem Gusseisen und von Bauteilen aus duktilem Gusseisen und Stahl gemäß Anspruch 19 zeigen sich die Vorteile des erfindungsgemäßen Verfahren besonders ausgeprägt.

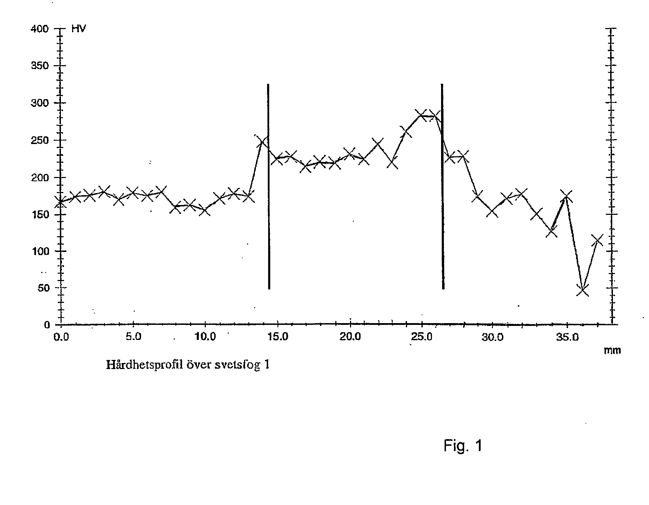

Die Erfindung wird nun im folgenden anhand von sechs Ausführungsbeispielen in besonders vorteilhaften Ausgestaltungen und anhand von Figur 1 näher erläutert.

Im ersten Ausführungsbeispiel werden zwei Bauteile aus duktilem Gusseisen miteinander verschweißt. Die Verbindung wird in Form einer V-Naht ausgeführt. Vor dem eigentlichen Schweißvorgang werden die beiden Bauteile auf 200 °C erwärmt. Beim anschließenden MAG-Schweißen wird als Lichtbogenmodus der Sprühlichtbogen verwendet. Die Lichtbogenspannung beträgt 44 V und der Strom beträgt 300 A. Die Drahtvorschubgeschwindigkeit wird auf 18 m/min eingestellt. Verwendet wird ein Volldraht, dessen Hauptbestandteile Eisen und Nickel sind und dessen Kohlenstoffgehalt unterhalb von 1 wt % liegt. Der Drahtdurchmesser beträgt 1,2 mm. Zum Schweißen wird eine im Vergleich zu üblichen Werten große freie Elektrodenlänge von 25 mm eingestellt. Als Schutzgas wird erfindungsgemäß eine Gasmischung aus 8 Vol.-% Kohlendioxid und Argon im verbleibenden Volumenrest verwendet. Zusätzlich kann das Schutzgas 275 vpm (0,0275 Vol.-%) Stickstoffmonoxid enthalten. Eine Nachbehandlung ist nicht notwendig, jedoch empfiehlt es sich die verbundenen Bauteile zur Abkühlung direkt nach dem Schweißvorgang in Kieselguhr einzubetten, bis sie ungefähr Umgebungstemperatur aufweisen. Es ergibt sich eine Zugfestigkeit von 250 Mpa und die Elongation beträgt 2 %.

Im zweiten Ausführungsbeispiel werden zwei Bauteile aus duktilem Gusseisen mit einer Kehlnaht verbunden. Die Vorwärmtemperatur beträgt 250 °C. Folgende Einstellungen werden beim MAG-Schweißen gewählt: Sprühlichtbogen, 45 V Lichtbogenspannung und 450 A Strom, 16 m/min Drahtvorschubgeschwindigkeit, 1,6 mm Drahtdurchmesser, 28 mm freie Elektrodenlänge. Das Schutzgas enthält 10 Vol.-% Kohlendioxid, 3 Vol.-% Sauerstoff und Argon. Neben dieser Schutzgasmischung zeigen sich die Vorteile der Erfindung auch bei einer Mischung aus 10 Vol.-% Kohlendioxid, 3 Vol.-% Sauerstoff, 30 Vol.-% Helium und restlich Argon. Auch eine Schutzgasmischung aus 15 Vol.-% Kohlendioxid in Argon sowie eine Mischung aus 5 Vol.-% Sauerstoff in Argon ist möglich.

Das Verbinden von Bauteile aus duktilem Gusseisen und Stahl wird im dritten Ausführungsbeispiel erläutert. Die beiden Bauteile oder zumindest das Bauteil aus duktilem Gusseisen werden vor dem Schweißvorgang auf 230 °C erwärmt. Für das MAG-Schweißen werden folgende Parameter gewählt: Sprühlichtbogen, 37 V Lichtbogenspannung und 280 A Strom, 22 m/min Drahtvorschubgeschwindigkeit, 1,0 mm Drahtdurchmesser, 22 mm freie Elektrodenlänge. Die Kehlnaht kann sowohl in horizontaler Lage als auch in der PB-Position ausgeführt werden. Folgende Schutzgasmischung wird verwendet: 8 Vol.-% Kohlendioxid, 20 Vol.-% Helium und restlich Argon. Anstelle des Kohlendioxids ist auch ein Anteil von 4 Vol.-% Sauerstoff möglich. Als Nachbehandlung zur Verbesserung der Mikrostruktur empfiehlt sich ein Erwärmen der verschweißten Bauteile für 2 Stunden auf 700 °C und anschließender Abkühlung an Luft.

Im vierten Ausführungsbeispiel wird wiederum ein Bauteil aus duktilem Gusseisen mit einem Bauteil aus Stahl verbunden. Bei folgenden Schutzgasmischungen zeigen sich die erfindungsgemäßen Vorteile in besonders ausgeprägten Weise: bei einem Gemisch aus 5 Vol.-% Kohlendioxid, 1000 vpm Stickstoffmonoxid, 40 Vol.-% Helium und restlich Argon sowie bei einem Gemisch aus 3 Vol.-% Sauerstoff, 200 vpm Stickstoffmonoxid, 20 Vol.-% Helium und restlich Argon. Die übrigen Schweißparameter entsprechen den vorgenannten Ausführungsbeispielen. Abweichend davon wird die freie Elektrodenlänge gewählt, die hier zwischen 28 bis 32 mm liegt.

Im fünften Ausführungsbeispiel wird eine Platte aus duktilem Gusseisen mit einer Platte aus niedriglegierten Stahl mit einer V-Naht verbunden. Die Platten haben eine Dicke von 15 mm. Es wird auf 250 °C vorgewärmt. Es werden zwei Schweißlagen eingebracht. Es wird ein nickelhaltiger Volldraht mit einem Drahtdurchmesser von 1,2 mm verwendet. Die Schweißgeschwindigkeit beträgt 28 cm/min. Als Schutzgas wird ein Gemisch aus 2 Vol.-% Kohlendioxid, 30 Vol.-% Helium, 275 vpm Stickstoffmonoxid und restlich Argon verwendet. Die Schweißparameter für die erste Lage sind: Lichtbogenspannung 33,3 V, Lichtbogenstrom 268 A, Drahtvorschubgeschwindigkeit 16,1 m/min, freie Elektrodenlänge 37 mm. Mit diesen Schweißparametern wird eine Abschmelzleistung von 8,3 kg/h erreicht. Für die zweite Lagen werden folgende Parameter verwendet: Lichtbogenspannung 41,5 V, Lichtbogenstrom 308 A, Drahtvorschubgeschwindigkeit 18 m/min, freie Elektrodenlänge 22 mm. Hier beträgt die Abschmelzrate 9,2 kg/h. Es entsteht eine V-Naht von hervorragender Güte mit einer Zugfestigkeit von 300 Mpa und mit einer Elongation von 2 %. Wird anstelle des vorgenannten Schutzgasgemisches ein Gasgemisch aus 2 Vol.-% Kohlendioxid, 275 vpm Stickstoffmonoxid und restlich Argon verwendet ergibt sich ebenfalls eine qualitativ hochwertige Naht, wenn auch die Zugfestigkeit geringer ist als bei der heliumhaltigen Schutzgasmischung. Figur 1 zeigt hierzu das Ergebnis des Härtetests der mit der erstgenannten Schutzgasmischung gefertigten Schweißverbindung. Nach rechts ist dabei der Fortlauf in mm der nach oben aufgetragenen Härte in der Stahlplatte, im Bereich der Schweißnaht und in der Platte aus duktilem Gusseisen angegeben. Der Bereich der Schweißverbindung ist durch die beiden senkrechten Striche skizziert. Es zeigt sich, dass sich die nach oben aufgetragen Härte im Bereich der Schweißnaht zwar ändert, die Änderung jedoch sehr gering ist. Die Schweißnaht ist folglich von hoher Güte.

In einem Beispiel werden zwei Platten mit 15 mm Dicke aus duktilem Gusseisen verbunden. Die Platten werden auf 250 °C vorgewärmt. Die Schweißparameter lauten: Lichtbogenspannung 38 V, Lichtbogenstrom 453 A, Drahtvorschubgeschwindigkeit 27 m/min, Drahtdurchmesser 1,2 mm, freie Elektrodenlänge 30 mm. Die Schweißgeschwindigkeit beträgt 28,5 cm/min und die Abschmelzrate liegt bei 14 kg/h.

## Patentansprüche

1. Verfahren zum Lichtbogenschweißen mit abschmelzender Elektrode unter Schutzgas zum Verbinden von Bauteilen, wobei das eine Bauteil aus duktilem Gusseisen und das andere Bauteil aus duktilem Gusseisen oder Stahl hergestellt ist und wobei im Schutzgas neben Argon Kohlendioxid und/oder Sauerstoff enthalten ist, **dadurch gekennzeichnet, dass** im Schutzgas Kohlendioxid in einem Anteilsbereich von 1 bis 15 Vol.-% und/oder Sauerstoff in einem Anteilsbereich von 0,5 bis 10 Vol.-% vorgesehen wird und das Schutzgas im verbleibenden Volumenanteil aus Argon oder einer Argon-Helium-Mischung besteht.

2. Verfahren nach Anspruch 1, **dadurch gekennzeichnet, dass** Abschmelzraten von mehr als 4 kg/h, vorzugsweise von mehr als 8 kg/h, besonders bevorzugt von mehr als 12 kg/h erreicht werden.

3. Verfahren nach Anspruch 1 oder 2, **dadurch gekennzeichnet, dass** zur Herstellung der Verbindung zwei Schweißdrähte verwendet werden.

4. Verfahren nach einem der Ansprüche 1 bis 3, **dadurch gekennzeichnet, dass** dem Schutzgas Kohlendioxid in einem Anteil von 2 bis 10 Vol.-% beigegeben wird.

5. Verfahren nach einem der Ansprüche 1 bis 4, **dadurch gekennzeichnet**, im Schutzgas Sauerstoff in einem Anteil von 1 bis 3 Vol.-% vorgesehen wird.

6. Verfahren nach einem der Ansprüche 1 bis 5, **dadurch gekennzeichnet, dass** dem Schutzgas zusätzlich Stickstoffmonoxid zugegeben wird.

7. Verfahren nach einem der Ansprüche 1 bis 6, **dadurch gekennzeichnet, dass** dem Schutzgas 10 bis 60 Vol.-% Helium, vorzugsweise 20 bis 50 Vol.-% Helium, besonders bevorzugt 30 bis 40 Vol.-% beigegeben wird.

8. Verfahren nach einem der Ansprüche 1 bis 7, **dadurch gekennzeichnet, dass** ein Sprühlichtbogen verwendet wird.

9. Verfahren nach einem der Ansprüche 1 bis 8, **dadurch gekennzeichnet, dass** eine freie Elektrodenlänge von mindestens 15 mm, vorzugsweise von mindestens 18 mm verwendet wird.

10. Verfahren nach einem der Ansprüche 1 bis 7, **dadurch gekennzeichnet, dass** das Verfahren des Impulslichtbogenschweißens verwendet wird.

11. Verfahren nach einem der Ansprüche 1 bis 10, **dadurch gekennzeichnet, dass** eine Drahtvorschubgeschwindigkeit von 10 bis 50 m/min, bevorzugt von 15 bis 30 m/min verwendet wird.

12. Verfahren nach einem der Ansprüche 1 bis 11, **dadurch gekennzeichnet, dass** ein Drahtdurchmesser von 0,8 bis 2,0 mm, vorzugsweise von 1,0 bis 1,6 mm verwendet wird.

13. Verfahren nach einem der Ansprüche 1 bis 12, **dadurch gekennzeichnet, dass** eine Lichtbogenspannung von mehr als 28 V, vorzugsweise im Bereich von 32 und 45 V verwendet wird.

14. Verfahren nach einem der Ansprüche 1 bis 13, **dadurch gekennzeichnet, dass** und ein Strom von 220 bis 500 A, vorzugsweise von 260 bis 450 A eingestellt wird.

15. Verfahren nach einem der Ansprüche 1 bis 14, **dadurch gekennzeichnet, dass** die Verbindung aus mindestens zwei Schweißlagen erstellt wird.

16. Verfahren nach einem der Ansprüche 1 bis 15, **dadurch gekennzeichnet, dass** zumindest die Bauteile aus duktilem Gusseisen vor dem Schweißvorgang auf Temperaturen von 200 bis 250 °C vorgewärmt werden.

17. Verfahren nach einem der Ansprüche 1 bis 16, **dadurch gekennzeichnet, dass** die verbundenen Bauteile nach dem Schweißvorgang in Kieselguhr abgekühlt werden.

18. Verfahren nach einem der Ansprüche 1 bis 16, **dadurch gekennzeichnet, dass** die verbundenen Bauteile nach dem Schweißvorgang für 1 bis 3 Stunden auf Temperaturen zwischen 500 bis 900 °C erwärmt werden.

19. Verwendung einer Schutzgasmischung zum Lichtbogenschweißen von duktilem Gusseisen mit abschmelzender Elektrode, welche neben Argon Kohlendioxid und/oder Sauerstoff enthält, **dadurch gekennzeichnet, dass** die Schutzgasmischung 1 bis 15 Vol.-% Kohlendioxid und/oder 0,5 bis 10 Vol.-% Sauerstoff enthält und der verbleibende Volumenanteil aus Argon oder einer Argon-Helium-Mischung besteht.

20. Verwendung einer Schutzgasmischung nach Anspruch 19, **dadurch gekennzeichnet, dass** das Schutzgas 2 bis 10 Vol.% Kohlendioxid enthält.

21. Verwendung einer Schutzgasmischung nach Anspruch 19 oder 20, **dadurch gekennzeichnet, dass** das Schutzgas 1 bis 3 Vol.-% Sauerstoff enthält.

22. Verwendung einer Schutzgasmischung nach einem der Ansprüche 19 bis 21, **dadurch gekennzeichnet, dass** das Schutzgas Stickstoffmonoxid enthält.

23. Verwendung einer Schutzgasmischung nach einem der Ansprüche 19 bis 22, **dadurch gekennzeichnet, dass** das Schutzgas 10 bis 60 Vol.-% Helium, vorzugsweise 20 bis 50 Vol.-% Helium, besonders bevorzugt 30 bis 40 Vol.-% enthält.

## Claims

1. Process for arc welding with consumable electrode under shielding gas in order to join components, one component being made from ductile cast iron and the other component being made from ductile cast iron or steel, and the shielding gas, in addition to argon, also containing carbon dioxide and/or oxygen, **characterized in that** in the shielding gas carbon dioxide is present in a proportion range from 1 to 15% by volume and/or oxygen is present in a proportion range from 0.5 to 10% by volume, while the remaining volumetric proportion of the shielding gas consists of argon or an argon-helium mixture.

2. Process according to Claim 1, **characterized in that** electrode-melting rates of more than 4 kg/h, preferably of more than 8 kg/h, particularly preferably of more than 12 kg/h are achieved.

3. Process according to Claim 1 or 2, **characterized in that** two welding wires are used to produce the join.

4. Process according to any of Claims 1 to 3, **characterized in that** carbon dioxide is admixed with the shielding gas in a proportion of from 2 to 10% by volume.

5. Process according to any of Claims 1 to 4, **characterized in that** oxygen is present in a proportion of from 1 to 3% by volume in the shielding gas.

6. Process according to any of Claims 1 to 5, **characterized in that** nitrogen monoxide is additionally added to the shielding gas.

7. Process according to any of Claims 1 to 6, **characterized in that** 10 to 60% by volume of helium, preferably 20 to 50% by volume of helium, particularly preferably 30 to 40% by volume, is admixed with the shielding gas.

8. Process according to any of Claims 1 to 7, **characterized in that** a spray arc is used.

9. Process according to any of Claims 1 to 8, **characterized in that** a free electrode length of at least 15 mm, preferably of at least 18 mm is used.

10. Process according to any of Claims 1 to 7, **characterized in that** the pulsed arc welding process is used.

11. Process according to any of Claims 1 to 10, **characterized in that** a wire feed rate of 10 to 50 m/min, preferably 15 to 30 m/min is used.

12. Process according to any of Claims 1 to 11, **characterized in that** a wire diameter of from 0.8 to 2.0 mm, preferably from 1.0 to 1.6 mm is used.

13. Process according to any of Claims 1 to 12, **characterized in that** an arc voltage of more than 28 V, preferably in the range of 32 and 45 V is used.

14. Process according to any of Claims 1 to 13, **characterized in that** a current of from 220 to 500 A, preferably from 260 to 450 A is set.

15. Process according to any of Claims 1 to 14, **characterized in that** the join is produced from at least two weld passes.

16. Process according to any of Claims 1 to 15, **characterized in that** at least the components made from ductile cast iron are preheated to temperatures from 200 to 250°C prior to the welding operation.

17. Process according to any of Claims 1 to 16, **characterized in that** the joined components are cooled in kieselguhr following the welding operation.

18. Process according to any of Claims 1 to 16, **characterized in that** the joined components are heated at temperatures of between 500 and 900°C for 1 to 3 hours following the welding operation.

19. Use of a shielding gas mixture for the arc welding of ductile cast iron with consumable electrode, which in addition to argon also contains carbon dioxide and/or oxygen, **characterized in that** the shielding gas mixture contains 1 to 15% by volume of carbon dioxide and/or 0.5 to 10% by volume of oxygen, and the remaining volumetric proportion consists of argon or an argon-helium mixture.

20. Use of a shielding gas mixture according to Claim 19, **characterized in that** the shielding gas contains 2 to 10% by volume of carbon dioxide.

21. Use of a shielding gas mixture according to Claim 19 or 20, **characterized in that** the shielding gas contains 1 to 3% by volume of oxygen.

22. Use of a shielding gas mixture according to any of Claims 19 to 21, **characterized in that** the shielding gas contains nitrogen monoxide.

23. Use of a shielding gas mixture according to any of Claims 19 to 22, **characterized in that** the shielding gas contains 10 to 60% by volume of helium, preferably 20 to 50% by volume of helium, particularly preferably 30 to 40% by volume.

## Revendications

1. Procédé pour relier des composants par soudage à l'arc à l'aide d'une électrode fusible et sous un gaz de protection, l'un des composants étant réalisé en fonte ductile et l'autre composant en fonte ductile ou en acier, le gaz de protection contenant en plus d'argon du dioxyde de carbone et/ou de l'oxygène, **caractérisé en ce que** le gaz de protection contient du dioxyde de carbone dans une plage de proportion de 1 à 15 % en volume et/ou de l'oxygène dans une plage de proportion de 0,5 à 10 % en volume, le reste du volume du gaz de protection étant constitué d'argon ou d'un mélange d'argon et d'hélium.

2. Procédé selon la revendication 1, **caractérisé en ce qu'**il permet d'obtenir des taux de fusion de plus de 4 kg/h, de préférence de plus de 8 kg/h et de façon particulièrement préférable de plus de 12 kg/h.

3. Procédé selon les revendications 1 ou 2, **caractérisé en ce que** deux fils de soudage sont utilisés pour réaliser la liaison.

4. Procédé selon l'une des revendications 1 à 3, **caractérisé en ce que** du dioxyde de carbone est ajouté au gaz de protection dans une proportion de 2 à 10 % en volume.

5. Procédé selon l'une des revendications 1 à 4, **caractérisé en ce que** de l'oxygène est ajouté au gaz de protection à une proportion de 1 à 3 % en volume.

6. Procédé selon l'une des revendications 1 à 5, **caractérisé en ce que** du monoxyde d'azote est de plus ajouté au gaz de protection.

7. Procédé selon l'une des revendications 1 à 6, **caractérisé en ce que** de 10 à 60 % en volume d'hélium, de préférence de 20 à 50 % en volume d'hélium et de façon particulièrement préférable de 30 à 40 % en volume sont ajoutés au gaz de protection.

8. Procédé selon l'une des revendications 1 à 7, **caractérisé en ce qu'**on utilise un arc à pulvérisation.

9. Procédé selon l'une des revendications 1 à 8, **caractérisé en ce qu'**on utilise une longueur libre d'électrode d'au moins 15 mm et de préférence d'au moins 18 mm.

10. Procédé selon l'une des revendications 1 à 7, **caractérisé en ce que** l'on utilise le procédé du soudage à l'arc pulsé.

11. Procédé selon l'une des revendications 1 à 10, **caractérisé en ce que** l'on utilise une vitesse d'avancement du fil de 10 à 50 m/min et de préférence de 15 à 30 m/min.

12. Procédé selon l'une des revendications 1 à 11, **caractérisé en ce que** l'on utilise un fil d'un diamètre de 0,8 à 2,0 m et de préférence de 1,0 à 1,6 mm.

13. Procédé selon l'une des revendications 1 à 12, **caractérisé en ce que** l'on utilise une tension d'arc de plus de 28 V et de préférence comprise dans la plage de 32 à 45 V.

14. Procédé selon l'une des revendications 1 à 13, **caractérisé en ce que** l'on règle un courant de 220 à 500 A et de préférence de 260 à 450 A.

15. Procédé selon l'une des revendications 1 à 14, **caractérisé en ce que** la liaison est réalisée à partir d'au moins deux positions de soudage.

16. Procédé selon l'une des revendications 1 à 15, **caractérisé en ce qu'**au moins les composants en fonte ductile sont préchauffés à des températures de 200 à 250°C avant l'opération de soudage.

17. Procédé selon l'une des revendications 1 à 16, **caractérisé en ce que** les composants reliés sont refroidis dans de la terre de diatomées après l'opération de soudage.

18. Procédé selon l'une des revendications 1 à 16, **caractérisé en ce qu'**après l'opération de soudage, les composants reliés sont chauffés pendant 1 à 3 heures à des températures comprises entre 500 et 900°C.

19. Utilisation d'un mélange de gaz de protection pour le soudage à l'arc de fonte ductile à l'aide d'une électrode fusible, et qui en plus de l'argon, contient du dioxyde de carbone et/ou de l'oxygène, **caractérisée en ce que** le mélange de gaz de protection contient de 1 à 15 % en volume de dioxyde de carbone et/ou de 0,5 à 10 % en volume d'oxygène, le reste du volume étant constitué d'argon ou d'un mélange d'argon et d'hélium.

20. Utilisation d'un mélange de gaz de protection selon la revendication 19, **caractérisé en ce que** le gaz de protection contient de 2 à 10 % en volume de dioxyde de carbone.

21. Utilisation d'un mélange de gaz de protection selon les revendications 19 ou 20, **caractérisé en ce que** le gaz de protection contient de 1 à 3 % en volume d'oxygène.

22. Utilisation d'un mélange de gaz de protection selon l'une des revendications 19 à 21, **caractérisée en ce que** le gaz de protection contient du monoxyde d'azote.

23. Utilisation d'un mélange de gaz de protection selon l'une des revendications 19 à 22, **caractérisée en ce que** le gaz de protection contient de 10 à 60 % en volume d'hélium, de préférence de 20 à 50 % en volume d'hélium et de façon particulièrement préférable de 30 à 40 % en volume.
